# EUROPÄISCHE PATENTSCHRIFT

(11) **EP 3 542 181 B1**
(45) Veröffentlichungstag und Bekanntmachung des Hinweises auf die Patenterteilung: **06.04.2022**
(21) Anmeldenummer: 17800484.2
(22) Anmeldetag: 13.11.2017
(51) Int. Cl.: G01S 17/42, G01S 17/931, G01S 7/484

(54) **VERFAHREN ZUM BETREIBEN EINES OPTOELEKTRONISCHEN SENSORS EINES KRAFTFAHRZEUGS MIT VARIABLER ANSTEUERUNG EINER LICHTQUELLE, OPTOELEKTRONISCHER SENSOR, FAHRERASSISTENZSYSTEM SOWIE KRAFTFAHRZEUG**
METHOD FOR OPERATING AN OPTOELECTRONIC SENSOR OF A MOTOR VEHICLE WITH VARIABLE CONTROL OF A LIGHT SOURCE, OPTOELECTRONIC SENSOR, DRIVER ASSISTANCE SYSTEM AND MOTOR VEHICLE
PROCÉDÉ DE FONCTIONNEMENT D'UN CAPTEUR OPTOÉLECTRONIQUE D'UN VÉHICULE AUTOMOBILE AVEC COMMANDE VARIABLE D'UNE SOURCE LUMINEUSE, CAPTEUR OPTOÉLECTRONIQUE, SYSTÈME D'ASSISTANCE À LA CONDUITE ET VÉHICULE AUTOMOBILE

(30) Priorität: 18.11.2016 DE 102016122194
(43) Veröffentlichungstag der Anmeldung: 25.09.2019
(73) Patentinhaber: Valeo Schalter und Sensoren GmbH, 74321 Bietigheim-Bissingen (DE)
(72) Erfinder: SCHENK, Jochen, 74321 Bietigheim-Bissingen (DE); SELBMANN, Frank, 74321 Bietigheim-Bissingen (DE)
(86) Internationale Anmeldenummer: PCT/EP2017/078976
(87) Internationale Veröffentlichungsnummer: WO 2018/091384

(56) Entgegenhaltungen:
- DE-A1-102012 020 288
- DE-A1-102013 219 567
- US-A1- 2016 274 589

## Beschreibung

Die vorliegende Erfindung betrifft ein Verfahren zum Betreiben eines optoelektronischen Sensors eines Kraftfahrzeugs, bei welchem während eines Messzyklus zum Erfassen eines Objekts mit einer Sendeeinrichtung Lichtpulse ausgesendet werden und die von dem Objekt reflektierten Lichtpulse mit einer Empfangseinrichtung empfangen werden, wobei zum Aussenden der Lichtpulse eine Lichtquelle der Sendeeinrichtung zu bestimmten Sendezeitpunkten angesteuert wird und die Lichtpulse mit einer Ablenkeinheit der Sendeeinrichtung innerhalb eines vorbestimmten Winkelbereichs abgelenkt werden. Darüber hinaus betrifft die vorliegende Erfindung einen optoelektronischen Sensor. Des Weiteren betrifft die vorliegende Erfindung ein Fahrerassistenzsystem. Schließlich betrifft die vorliegende Erfindung ein Kraftfahrzeug.

Das Interesse richtet sich vorliegend insbesondere auf optoelektronische Sensoren für Kraftfahrzeuge. Derartige optoelektronische Sensoren können beispielsweise als Lidar-Sensoren (Lidar - Light Detection and Ranging) oder als Laserscanner ausgebildet sein. Solche optoelektronischen Sensoren werden beispielsweise in Kraftfahrzeugen verbaut, um während der Fahrt bzw. im Betrieb des Kraftfahrzeugs die Umgebung des Kraftfahrzeugs zu erfassen. Bei dem optoelektronischen Sensor handelt es sich dabei insbesondere um eine abtastende optische Messvorrichtung, mittels welcher Objekte bzw. Hindernisse in der Umgebung des Kraftfahrzeugs erfasst werden können. Beispielsweise kann mit dem optoelektronischen Sensor ein Abstand zwischen dem Kraftfahrzeug und dem Objekt auf Grundlage der Laufzeit eines Lichtpulses bzw. nach dem sogenannten Time-of-Flight-Prinzip bestimmt werden. Der optoelektronische Sensor umfasst üblicherweise eine Sendeeinrichtung, die beispielsweise eine Laserdiode aufweist, mittels welcher ein optisches Sendesignal in Form eines Lichtpulses ausgesendet werden kann. Darüber hinaus umfasst der optoelektronische Sensor eine entsprechende Empfangseinrichtung, welche beispielsweise zumindest eine Fotodiode aufweist, mittels welcher der von dem Objekt reflektierte Lichtpuls als Empfangssignal empfangen werden kann.

Mit dem optoelektronischen Sensor werden die Lichtpulse in einem vorbestimmten Winkelbereich ausgesendet. Zum Ablenken der Lichtpulse bzw. des Laserlichts innerhalb des Winkelbereichs weist die Sendeeinrichtung eine Ablenkeinheit auf, die beispielsweise einen Spiegel umfassen kann. Dieser Spiegel kann sich beispielsweise periodisch bewegen. Die Lichtpulse können zu vorbestimmten Sendezeitpunkten ausgesendet werden. Somit kann mit der Sendeeinrichtung ein vorbestimmter horizontaler Winkelbereich in der Umgebung des Kraftfahrzeugs abgetastet werden. Durch die Ansteuerung der Sendeeinrichtung bzw. einer Lichtquelle der Sendeeinrichtung kann dann die Winkelauflösung innerhalb des vorbestimmten Winkelbereichs bestimmt werden. Dabei ist es üblicherweise vorgesehen, dass die Lichtquelle periodisch angesteuert wird. Hierdurch ergibt sich eine höhere Messdichte in den Randbereichen der Spiegelauslenkung, da dort die Winkelgeschwindigkeit des Spiegels niedriger ist als bei der Auslenkung um eine Ursprungslage.

Dokument DE 10 2013 219567 A1 offenbart einen Mikrospiegelscanner mit einem verstellbaren mikromechanischen Spiegel, der zyklisch eine bestimmte Abfolge von Spiegelstellung durchfährt.

Dokument US 2016/274589 A1 offenbart einen LIDAR-Sensor mit einem rotierenden Spiegel.

Es ist Aufgabe der vorliegenden Erfindung, eine Lösung aufzuzeigen, wie eine Messung mit einem optoelektronischen Sensor der eingangs genannten Art effizienter und sicherer durchgeführt werden kann.

Diese Aufgabe wird erfindungsgemäß durch ein Verfahren, durch einen optoelektronischen Sensor, durch ein Fahrerassistenzsystem sowie durch ein Kraftfahrzeug mit den Merkmalen gemäß den jeweiligen unabhängigen Ansprüchen gelöst. Vorteilhafte Ausführungen der Erfindung sind Gegenstand der abhängigen Ansprüche.

Bei einer Ausführungsform eines Verfahrens zum Betreiben eines optoelektronischen Sensors eines Kraftfahrzeugs werden bevorzugt während eines Messzyklus zum Erfassen eines Objekts mit einer Sendeeinrichtung Lichtpulse ausgesendet. Des Weiteren werden die von dem Objekt reflektierten Lichtpulse bevorzugt mit einer Empfangseinrichtung empfangen. Zum Aussenden der Lichtpulse wird bevorzugt eine Lichtquelle der Sendeeinrichtung zu bestimmten Sendezeitpunkten angesteuert und die Lichtpulse werden insbesondere mit einer Ablenkeinheit der Sendeeinrichtung innerhalb eines vorbestimmten Winkelbereichs abgelenkt. Dabei wird die Lichtquelle bevorzugt derart angesteuert, dass sich Zeitintervalle zwischen den bestimmten Sendezeitpunkten voneinander unterscheiden.

Ein erfindungsgemäßes Verfahren dient zum Betreiben eines optoelektronischen Sensors eines Kraftfahrzeugs. Hierbei werden während eines Messzyklus zum Erfassen eines Objekts mit einer Sendeeinrichtung Lichtpulse ausgesendet und die von dem Objekt reflektierten Lichtpulse mit einer Empfangseinrichtung empfangen. Zum Aussenden der Lichtpulse wird eine Lichtquelle der Sendeeinrichtung zu bestimmten Sendezeitpunkten angesteuert und die Lichtpulse werden mit einer Ablenkeinheit der Sendeeinrichtung innerhalb eines vorbestimmten Winkelbereichs abgelenkt. Dabei wird die Lichtquelle derart angesteuert, dass sich Zeitintervalle zwischen den bestimmten Sendezeitpunkten voneinander unterscheiden.

Der optoelektronische Sensor kann in einem Kraftfahrzeug, insbesondere einem Personenkraftwagen, verbaut werden. Der optoelektronische Sensor kann insbesondere als Lidar-Sensor oder als Laserscanner ausgebildet sein. Mit dem optoelektronischen Sensor können Objekte in der Umgebung des Kraftfahrzeugs erfasst werden. Insbesondere kann ein Abstand zwischen dem Kraftfahrzeug und dem Objekt auf Grundlage der Messungen des optischen Sensors bestimmt werden. Zum Erfassen des Objekts werden mit dem optoelektronischen Sensor zeitlich aufeinanderfolgende Messzyklen durchgeführt. In jedem Messzyklus wird mit der Sendeeinrichtung eine bestimmte Anzahl von Sendesignalen in Form von Lichtpulsen ausgesendet. Dabei werden die Lichtpulse innerhalb des vorbestimmten Winkelbereichs, insbesondere innerhalb eines vorbestimmten horizontalen Winkelbereichs, ausgesendet. Die ausgesendeten Lichtpulse, die von dem Objekt reflektiert werden, können dann mit der Empfangseinrichtung des optoelektronischen Sensors empfangen werden.

Die Sendeeinrichtung weist die Lichtquelle auf, die beispielsweise eine Laserdiode umfassen kann. Mit dieser Lichtquelle werden dann die Lichtpulse bzw. die Laserpulse ausgesendet. Unter Lichtpuls ist vorliegend zu verstehen, dass die Lichtquelle zu bestimmten Sendezeitpunkten für eine vorbestimmte zeitliche Dauer aktiviert wird und anschließend wieder deaktiviert wird. Hierzu kann die Lichtquelle mit einer Recheneinrichtung des optoelektronischen Sensors angesteuert werden. Die Lichtquelle wird also gepulst betrieben. Die von der Lichtquelle ausgesendeten Lichtpulse werden von einer Ablenkeinheit der Sendeeinrichtung abgelenkt. Die Ablenkeinheit kann beispielsweise einen Spiegel bzw. ein Spiegelelement umfassen, welcher bzw. welches sich periodisch bewegt. Somit können die Lichtpulse entlang des vorbestimmten Winkelbereichs abgelenkt werden. Damit können innerhalb des vorbestimmten Winkelbereichs an diskreten Winkelpositionen, welche insbesondere in dem Winkelbereich gleichmäßig verteilt sind, die Sendesignale in Form der Lichtpulse ausgesendet werden.

Gemäß einem wesentlichen Aspekt der vorliegenden Erfindung ist es vorgesehen, dass die Lichtquelle derart angesteuert wird, dass sich Zeitintervalle zwischen den bestimmten Sendezeitpunkten voneinander unterscheiden. Mit anderen Worten wird die Lichtquelle dynamisch angesteuert. Insbesondere ist es vorgesehen, dass die Lichtquelle nicht periodisch angesteuert wird. Dies bedeutet, dass sich die Zeitintervalle zwischen den Sendezeitpunkten, zu denen die Lichtquelle angesteuert wird, voneinander unterscheiden. Insbesondere ist es vorgesehen, dass sich zumindest einige Zeitintervalle zwischen den Sendezeitpunkten voneinander unterscheiden. Dies ermöglicht es beispielsweise, die Lichtpulse in Abhängigkeit von der Bewegung der Ablenkeinheit bzw. eines Spiegelelements der Ablenkeinheit anzusteuern. Auf diese Weise kann berücksichtigt werden, dass das Spiegelelement der Ablenkeinheit beispielsweise in einem Umkehrpunkt der Auslenkung eine niedrigere Winkelgeschwindigkeit aufweist und damit bei einer periodischen Ansteuerung der Lichtquelle eine höhere Messdichte in den Randbereichen erreicht wird. Wenn die Ansteuerung der Lichtquelle an die periodische Bewegung der Ablenkeinheit angepasst wird, dann kann der Messzyklus effizienter und gegebenenfalls innerhalb einer kürzeren zeitlichen Dauer durchgeführt werden. Zudem kann verhindert werden, dass einzelne Bereiche in dem Winkelbereich, welcher abgetastet werden sollen, übermäßig beleuchtet werden, und somit Lebewesen gefährdet werden können. Damit kann der optoelektronische Sensor sicherer betrieben werden.

Die Ablenkeinheit weist ein Spiegelelement auf, welches zum Ablenken der Lichtpulse periodisch ausgelenkt wird. Grundsätzlich kann die Ablenkeinheit ein Spiegelelement aufweisen, welches beispielsweise rotiert wird. Bevorzugt ist es aber vorgesehen, dass die Ablenkeinheit ein Spiegelelement aufweist, welches im Wesentlichen plattenförmig ausgebildet ist. Dieses Spiegelelement kann dann um eine Schwenkachse verschwenkt werden. Die Ablenkeinheit kann ferner einen entsprechenden Aktor aufweisen, mit dem das Spiegelelement bewegt bzw. verschwenkt werden kann. Der Aktor kann beispielsweise ein piezoelektrisches Element umfassen. Ferner ist es insbesondere vorgesehen, dass die Ablenkeinheit als Mikrosystem bzw. als MEMS (MEMS - Microelectromechanical System) ausgebildet ist. Auf diese Weise kann eine Ablenkeinheit bereitgestellt werden, die besonders bauraumsparend ausgebildet ist. Ferner kann die Ablenkeinheit mit verhältnismäßig hohen Frequenzen betrieben werden. Beispielsweise können Frequenzen im Bereich von mehreren kHz erreicht werden. Darüber hinaus ergibt sich der Vorteil, dass das Spiegelelement nahezu cosinusförmig schwingt. Dabei werden die Lichtpulse auf einem Bereich des Spiegelelements ausgesendet, welcher der Schwenkachse zugeordnet ist. Durch die Bewegung des Spiegelelements ergibt sich im Bereich der Maximalauslenkung und/oder der Minimalauslenkung eine niedrigere Winkelgeschwindigkeit als bei einer Auslenkung um den 0°-Punkt. Diese unterschiedlichen Winkelgeschwi ndigkeiten können durch die variable Ansteuerung der Lichtquelle ausgeglichen werden.

Ein Auslenkwinkel des Spiegelelements wird bestimmt und die Lichtquelle wird in Abhängigkeit von dem bestimmten Auslenkwinkel angesteuert. Während der Bewegung des Spiegelelements kann fortlaufen die Position bzw. die Auslenkung des Spiegelelements bestimmt werden. Somit kann die Lichtquelle in Abhängigkeit von der aktuellen Auslenkung des Spiegelelements angesteuert werden. Zum Bestimmen des Auslenkwinkels des Spiegelelements kann beispielsweise ein Ansteuersignal herangezogen werden, mit dem der Aktor angesteuert wird, welcher wiederum das Spiegelelement bewegt. Zum Bestimmen des Auslenkwinkels des Spiegelelements kann mit der Ablenkeinheit auch ein Positionssignal ausgegeben werden, welches die Position bzw. die Auslenkung des Spiegelelements beschreibt. Es kann beispielsweise ein Signal ausgegeben werden, wenn sich das Spiegelelement in der maximalen oder der minimalen Auslenkung befindet. Da das Spiegelelement periodisch bewegt wird, kann zu jedem Zeitpunkt die aktuelle Auslenkung des Spiegelelements zuverlässig bestimmt werden.

Zusätzlich wird innerhalb des Winkelbereichs eine Mehrzahl von Winkelpositionen für das Aussenden der Lichtpulse bestimmt, zu jeder der Winkelpositionen wird ein Sendeauslenkwinkel bestimmt und der jeweilige Lichtpuls wird ausgesendet, falls der Auslenkwinkel des Spiegelelements einem der bestimmten Sendeauslenkwinkel entspricht. Wie bereits erläutert, sollen die Lichtpulse innerhalb des vorbestimmten horizontalen Winkelbereichs an diskreten Winkelpositionen ausgesendet werden, welche insbesondere gleichmäßig in dem Winkelbereich verteilt sind. Jeder dieser diskreten Winkelpositionen in dem Winkelbereich wird ein Sendeauslenkwinkel des Spiegelelements zugeordnet. Der Sendeauslenkwinkel beschreibt einen Auslenkwinkel des Spiegelelements, bei welchem ein Lichtpuls ausgesendet werden soll. Falls nun das Spiegelelement einen dieser Sendeauslenkwinkel erreicht, kann die Lichtquelle zum Aussenden des Lichtpulses angesteuert werden. Hierbei kann eine Zeit berücksichtigt werden, welche zwischen dem Ansteuern der Lichtquelle und dem Auftreffen des Lichtpulses auf das Spiegelelement verstreicht. Somit kann auf zuverlässige Weise erreicht werden, dass die Lichtpulse an den diskreten Winkelpositionen ausgesendet werden.

Weiterhin ist es vorgesehen, dass anhand des aktuellen Auslenkwinkels des Spiegelelements ein dem aktuellen Auslenkwinkel nächstliegender Sendeauslenkwinkel bestimmt wird und der Lichtpuls beim Erreichen des nächstliegenden Sendeauslenkwinkels ausgesendet wird. Während des Messzyklus wird fortlaufend die Auslenkung bzw. der Auslenkwinkel des Spiegelelements bestimmt. Wie bereits erläutert, kann die Ablenkeinheit angesteuert werden, damit das Spiegelelement eine periodische Bewegung durchführt. Damit sind die Ansteuerzeitpunkte, zu denen die Ablenkeinheit angesteuert wird, und eine Periodendauer der periodischen Bewegung des Spiegelelements bekannt. Hieraus kann dann der aktuelle Auslenkwinkel des Spiegelelements berechnet werden. Des Weiteren wird überprüft, welche der Sendeauslenkwinkel dem aktuellen Auslenkwinkel am nächsten ist. Falls dieser nächstliegende Sendeauslenkwinkel des Spiegelelements dann erreicht wird, wird der Lichtpuls ausgesendet. Somit wird es ermöglicht, dass die jeweiligen Lichtpulse an den Sendeauslenkwinkeln innerhalb einer kurzen Zeit ausgesendet werden. Auf diese Weise kann die zeitliche Dauer des Messzyklus, während dem die diskreten Winkelpositionen in dem Winkelbereich abgetastet werden, verkürzt werden.

Dabei ist es auch vorgesehen, dass anhand des aktuellen Auslenkwinkels und des nächstliegenden Sendeauslenkwinkels eine Wartezeit bestimmt wird, nach deren Ablauf das Spiegelelement den nächstliegenden Sendeauslenkwinkel erreichen wird, und der Lichtpuls nach dem Ablauf der Wartezeit ausgesendet wird. Auf Grundlage der aktuellen Auslenkung des Spiegelelements kann der nächstliegende Sendeauslenkwinkel bestimmt werden, bei dessen Erreichen der Lichtpuls ausgesendet werden soll. Da sich das Spiegelelement periodisch bewegt bzw. da die Bewegung des Spiegelelements bekannt ist, kann die Wartezeit, nach welcher das Spiegelelement den nächstliegenden Sendeauslenkwinkel erreichen wird, bestimmt werden. Somit kann die Ansteuerung der Lichtquelle auf einfache und zuverlässige Weise erfolgen.

Weiterhin ist es vorteilhaft, wenn die jeweiligen Lichtpulse während des Messzyklus bei jedem der Sendeauslenkwinkel nur einmal ausgesendet werden. An jedem der Sendeauslenkwinkel des Spiegelelements, die den diskreten Winkelpositionen innerhalb des horizontalen Winkelbereichs zugeordnet sind, wird also jeweils nur einmal ein Lichtpuls ausgesendet. Somit kann verhindert werden, dass sich beispielsweise eine höhere Messdichte in dem Randbereich der Auslenkung ergibt, die aber keine zusätzliche Information über den abzutastenden Winkelbereich liefert. Ferner kann der Messzyklus schneller durchgeführt werden. Des Weiteren kann die Sicherheit im Betrieb des optoelektronischen Sensors erhöht werden.

In einer weiteren Ausführungsform wird jedem der Sendeauslenkwinkel zu Beginn des Messzyklus ein erster Wert zugeordnet und falls ein Lichtpuls an einem der Sendeauslenkwinkel ausgesendet wird, wird diesem Sendeauslenkwinkel ein zweiter Wert zugeordnet. Beispielsweise kann ein Array vorgegeben werden, in welches die jeweiligen Sendeauslenkwinkel eingetragen werden. Zu jedem der Sendeauslenkwinkel kann als erster und als zweiter Wert ein Boolescher Wert oder ein Integer-Wert gespeichert werden. Beispielsweise kann der erste Wert Null oder "False" sein. Falls an einem der Sendeauslenkwinkel dann ein Lichtpuls ausgesendet wird, kann der Wert, welcher dieser Position zugeordnet ist, geändert werden bzw. dem Sendeauslenkwinkel kann der zweite Wert zugeordnet werden. Hierbei kann es beispielsweise vorgesehen sein, dass der zweite Wert Eins oder "True" ist. Somit kann auf einfache Weise nachvollzogen werden, bei welchem Sendeauslenkwinkel der Lichtpuls bereits ausgesendet wurde. Ferner kann auf zuverlässig Weise überprüft werden, ob an allen Sendeauslenkwinkeln der Lichtpuls ausgesendet wurde und somit alle diskreten Winkelpositionen innerhalb des Winkelbereichs abgetastet wurden.

Weiterhin ist es vorteilhaft, wenn für jeden der Sendeauslenkwinkel ein Sendezeitpunkt bestimmt wird und die Lichtquellen an den bestimmten Sendezeitpunkten angesteuert wird. Beispielsweise kann zu Beginn des Messzyklus für jede der diskreten Winkelpositionen der Sendeauslenkwinkel des Spiegelelements bestimmt werden. Da die periodische Bewegung des Spiegelelements bekannt ist, können dann für alle Sendeauslenkwinkel die zugehörigen Sendezeitpunkte bestimmt werden. Im Anschluss daran kann die Lichtquelle zu den bestimmten Sendezeitpunkten angesteuert werden. Somit kann eine feste Intervallfolge für die Ansteuerung der Lichtquelle definiert werden. Dabei können die Sendezeitpunkte beispielsweise bezüglich einer vorbestimmten Lage, beispielsweise der Nulllage oder einer Maximalauslenkung des Spiegelelements, definiert werden. Falls diese Lage erreicht wurde, kann dann die Lichtquelle zu den bestimmten Sendezeitpunkten angesteuert werden.

Weiterhin ist es vorteilhaft, wenn die Ansteuerung der Lichtquelle mit der Bewegung des Spiegelelements synchronisiert wird. Beispielsweise kann die Synchronisierung zu Beginn des Messzyklus erfolgen. Es kann auch vorgesehen sein, dass die Synchronisierung bei dem Start des optoelektronischen Sensors durchgeführt wird. Die Synchronisierung kann auch durchgeführt werden, falls das Spiegelelement eine vorbestimmte Lage, beispielsweise eine maximale oder eine minimale Auslenkung, erreicht. Die Synchronisierung kann auch mit Hilfe eines Rechtecksignals realisiert werden, bei dem eine positive bzw. eine negative Flanke im maximalen bzw. minimalen Auslenkungswinkel des Spiegelelements erzeugt wird. Dies ermöglicht einen zuverlässigen Betrieb des optoelektronischen Sensors.

In einer weiteren Ausführungsform wird nach dem Aussenden des Lichtpulses anhand der Laufzeit zwischen dem Aussenden des Lichtpulses und dem Empfangen des von dem Objekt reflektierten Lichtpulses ein Abstand zwischen dem optoelektronischen Sensor und dem Objekt bestimmt und anschließend wird der nächste Lichtpuls ausgesendet. Mit anderen Worten wird jeweils nach dem Aussenden eines Lichtpulses eine Laufzeitmessung durchgeführt, um den Abstand zu dem Objekt zu bestimmen. Hierbei wird berücksichtigt, dass die zeitliche Dauer zwischen dem Aussenden des Lichtpulses und dem Empfangen des reflektierten Lichtpulses geringer ist als das Zeitintervall zwischen den aufeinanderfolgenden Sendezeitpunkten. Dies ermöglicht insgesamt, dass der Messzyklus schneller durchgeführt werden kann.

Ein erfindungsgemäßer optoelektronischer Sensor für ein Kraftfahrzeug ist zum Durchführen eines erfindungsgemäßen Verfahrens ausgebildet. Der optoelektronische Sensor kann insbesondere als Lidar-Sensor oder als Laserscanner ausgebildet sein. Der optoelektronische Sensor kann die Sendeeinrichtung zum Aussenden der Lichtpulse und die Empfangseinrichtung zum Empfangen der reflektierten Lichtpulse aufweisen. Darüber hinaus kann der optoelektronische eine Ablenkeinheit, beispielsweise einen Mikrospiegel, aufweisen, mit dem Lichtpulse abgelenkt werden können. Ferner kann die Sendeeinrichtung des optoelektronischen Sensors die Lichtquelle, insbesondere eine Laserdiode, umfassen. Zudem kann der optoelektronische Sensor eine entsprechende Recheneinrichtung aufweisen, mittels welcher das Aussenden der Lichtpulse gesteuert werden kann. Ferner kann mit der Recheneinrichtung anhand der Laufzeit der Abstand zu dem Objekt bestimmt werden.

Ein erfindungsgemäßes Fahrerassistenzsystem umfasst einen erfindungsgemäßen optoelektronischen Sensor. Beispielsweise kann mit dem optoelektronischen Sensor ein Abstand zu einem Objekt bzw. einem Hindernis in der Umgebung des Kraftfahrzeugs bestimmt werden. Auf Grundlage des Abstands kann dann mit dem Fahrerassistenzsystem ein Hinweis an den Fahrer ausgegeben werden oder in die Längsführung und/oder die Querführung des Kraftfahrzeugs eingegriffen werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet. Das Kraftfahrzeug kann auch als Lastkraftwagen oder als Nutzfahrzeug ausgebildet sein.

Die mit Bezug auf das erfindungsgemäße Verfahren vorgestellten bevorzugten Ausführungsformen und deren Vorteile gelten entsprechend für den erfindungsgemäßen optoelektronischen Sensor, das erfindungsgemäße Fahrerassistenzsystem sowie das erfindungsgemäße Kraftfahrzeug.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem mit einem optoelektronischen Sensor aufweist;
- Fig. 2: eine schematische Darstellung des optoelektronischen Sensors;
- Fig. 3: eine zeitliche Abfolge von Sendezeitpunkten, an welchen mit einer Sendeeinrichtung des optoelektronischen Sensors Lichtpulse ausgesendet werden;
- Fig. 4: eine Häufigkeitsverteilung der Sendezeitpunkte gemäß Fig. 3 in Abhängigkeit von einem Winkel einer Ablenkeinheit des optoelektronischen Sensors;
- Fig. 5: ein schematisches Ablaufdiagramm eines Verfahrens zum Betreiben des optoelektronischen Sensors;
- Fig. 6: eine zeitliche Abfolge von Sendezeitpunkten, an welchen mit der Sendeeinrichtung Lichtpulse ausgesendet werden gemäß einer Ausführungsform der Erfindung;
- Fig. 7: eine zeitliche Abfolge von Sendezeitpunkten, an welchen mit der Sendeeinrichtung Lichtpulse ausgesendet werden gemäß einer weiteren Ausführungsform;
- Fig. 8: eine Häufigkeitsverteilung der Sendezeitpunkte gemäß Fig. 7 in Abhängigkeit von dem Winkel der Ablenkeinheit des optoelektronischen Sensors;
- Fig. 9: eine zeitliche Abfolge von Sendezeitpunkten, an welchen mit der Sendeeinrichtung Lichtpulse ausgesendet werden gemäß einer weiteren Ausführungsform der Erfindung; und
- Fig. 10: eine zeitliche Abfolge von Wartezeiten zwischen den jeweiligen Sendezeitpunkten gemäß Fig. 9.

In den Figuren werden und funktionsgleiche Elemente mit den gleichen Bezugszeichen versehen.

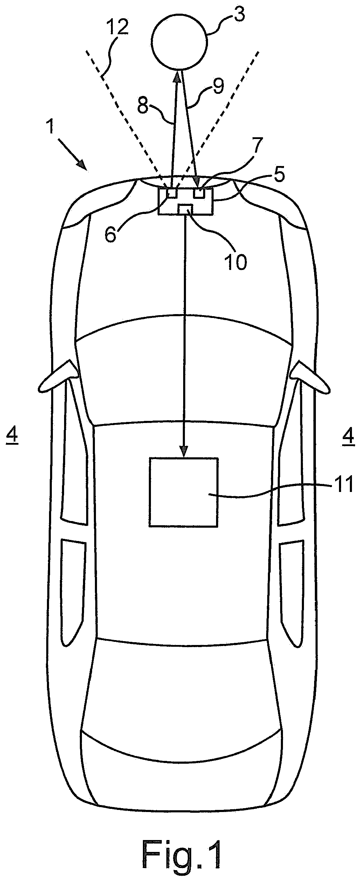

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches dazu dient, einen Fahrer des Kraftfahrzeugs 1 beim Führen des Kraftfahrzeugs 1 zu unterstützen. Mit dem Fahrerassistenzsystem 2 kann beispielsweise ein Objekt 3, welches sich in einer Umgebung 4 des Kraftfahrzeugs 1 befindet, erfasst werden. Falls das Objekt 3 erfasst wird, kann mit dem Fahrerassistenzsystem 2 eine Warnung an den Fahrer ausgegeben werden. Ferner kann mit dem Fahrerassistenzsystem 2 in die Lenkung, die Bremsanlage und/oder den Antriebsmotor eingegriffen werden, um eine Kollision mit dem Objekt 3 zu vermeiden.

Zum Erfassen des Objekts 3 umfasst das Fahrerassistenzsystem 2 einen optoelektronischen Sensor 5. Der optoelektronische Sensor 5 kann als Lidar-Sensor ausgebildet sein. Bevorzugt ist der optoelektronische Sensor 5 als Laserscanner ausgebildet. Der optoelektronische Sensor 5 umfasst eine Sendeeinrichtung 6, mittels welcher Lichtpulse als Sendesignal ausgesendet werden können. Dies ist vorliegend durch den Pfeil 8 veranschaulicht. Mit der Sendeeinrichtung 6 können die Lichtpulse in einem vorbestimmten Winkelbereich 12 ausgesendet werden. Beispielsweise können die Lichtpulse in einem vorbestimmten horizontalen Winkelbereich ausgesendet werden. Der optoelektronische Sensor 5 umfasst ferner eine Empfangseinrichtung 7, mittels welcher die von dem Objekt 3 reflektierten Lichtpulse wieder empfangen werden können. Dies ist vorliegend durch den Pfeil 9 veranschaulicht.

Darüber hinaus umfasst der optoelektronische Sensor 5 eine Recheneinrichtung 10, die beispielsweise durch einen Mikrocontroller, einen digitalen Signalprozessor oder einen FPGA gebildet sein kann. Mit der Recheneinrichtung 10 kann die Sendeeinrichtung 6 zum Aussenden der Lichtpulse angesteuert werden. Darüber hinaus kann die Recheneinrichtung 10 Signale der Empfangseinrichtung 7 auswerten, die mit der Empfangseinrichtung 7 auf Grundlage der empfangenen Lichtpulse erzeugt werden. Schließlich umfasst das Fahrerassistenzsystem 2 ein elektronisches Steuergerät 11, mit dem entsprechende Steuersignale in Abhängigkeit von dem mit dem optoelektronischen Sensor 5 erfassten Objekt 3 ausgegeben werden können.

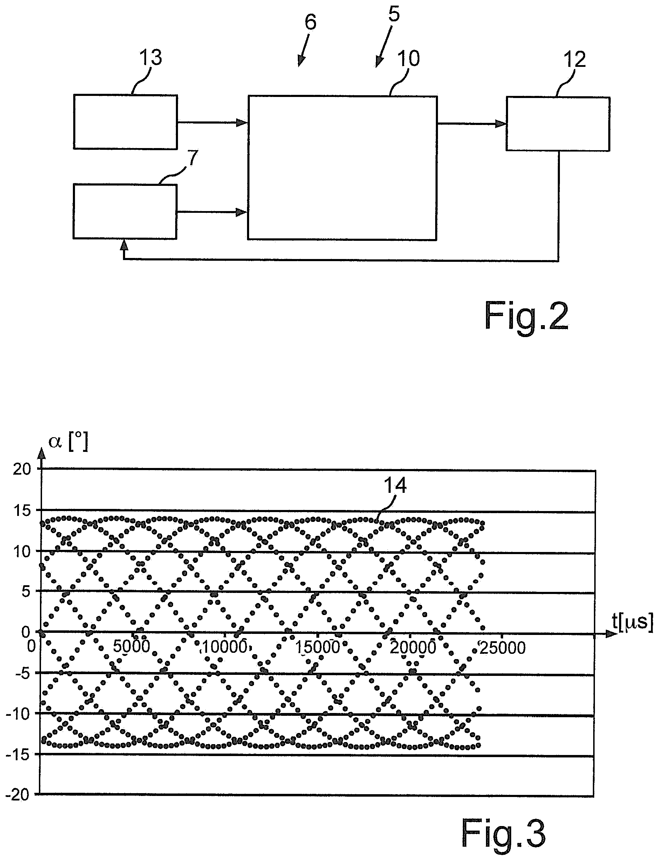

Fig. 2 zeigt eine schematische Darstellung des optoelektronischen Sensors 5. Hierbei ist zu erkennen, dass die Sendeeinrichtung 6 eine Lichtquelle 12 aufweist. Die Lichtquelle 12 kann beispielsweise durch eine Laserdiode gebildet sein. Darüber hinaus weist die Sendeeinrichtung 6 eine Ablenkeinheit 13 auf, mittels welcher die mit der Lichtquelle 12 ausgesendeten Lichtpulse abgelenkt werden können. Die Ablenkeinheit 13 kann ein Spiegelelement umfassen, welches mit einem Aktor bewegt wird. Insbesondere ist die Ablenkeinheit 13 als Mikrosystem ausgebildet bzw. umfasst einen Mikrospiegel. Dabei kann das Spiegelelement mit dem Aktor so angesteuert werden, dass dieses eine periodische Bewegung mit einer Frequenz von mehreren kHz, insbesondere 3,5 kHz, durchführt. Mit Hilfe der Recheneinrichtung 10 kann die Lichtquelle 12 zum Aussenden der Lichtpulse angesteuert werden. Hierzu kann mit der Recheneinrichtung 10 ein Steuersignal an die Lichtquelle 12 übertragen werden, durch welches die Lichtquelle 12 für eine vorbestimmte zeitliche Dauer aktiviert wird.

Mit der Lichtquelle 12 wird ferner ein Signal an die Empfangseinrichtung 7 übertragen, welche beschreibt, welches den Sendezeitpunkt des Aussendens des Lichtpulses beschreibt. Wenn mit der Empfangseinrichtung 7 dann der von dem Objekt 3 reflektierte Lichtpuls empfangen wird, kann ein entsprechendes Signal an die Recheneinrichtung 10 übertragen werden, welches den Empfangszeitpunkt des Lichtpulses beschreibt. Somit kann die Recheneinrichtung 10 auf Grundlagen der Laufzeit zwischen dem Aussenden des Lichtpulses und dem Empfangen des von dem Objekt 3 reflektieren Lichtpulses den Abstand zwischen dem optoelektronischen Sensor 5 und dem Objekt 3 bestimmen. Darüber hinaus kann mit der Ablenkeinheit 13 ein Signal an die Recheneinrichtung 10 übertragen werden, welches die aktuelle Position des Spiegelelements bzw. einen aktuellen Auslenkwinkel α des Spiegelelements beschreibt.

Bei aus dem Stand der Technik bekannten optoelektronischen Sensoren 5 wird die Lichtquelle 12 periodisch angesteuert. Ebenso bewegt sich das Spiegelelement der Ablenkeinheit 13 periodisch. Dadurch, dass sich das Spiegelelement bei seiner Bewegung in den Randbereichen bzw. an den Umkehrpunkten eine geringere Winkelgeschwindigkeit aufweist, ergibt sich an den Randbereichen eine höhere Dichte von Messpunkten. Hierzu zeigt Fig. 3 ein Diagramm, welches die zeitliche Abfolge von Sendezeitpunkten 14 zeigt, an welchen mit der Lichtquelle 12 die Lichtpulse ausgesendet werden. Dabei ist auf der Abszisse die Zeit t und auf der Ordinate der Auslenkwinkel α des Spiegelelements aufgetragen. Vorliegend schwingt das Spiegelelement zwischen einem Auslenkwinkel α von -14° und einem Auslenkwinkel α von +14°. Das Spiegelelement kann mit einer Frequenz von 3,5 kHz schwingen. Innerhalb des vorbestimmten Winkelbereichs 12, welcher in der Umgebung 4 des Kraftfahrzeugs 1 abgetastet werden soll, soll eine Winkelauflösung von 0,1°erreicht werden. Hierzu wird die Lichtquelle 12 mit einer Frequenz von 34 kHz angesteuert. Vorliegend wird eine Zeitdauer von etwa 24 ms benötigt, um alle diskreten Winkelpositionen in dem Winkelbereich 12 zu vermessen.

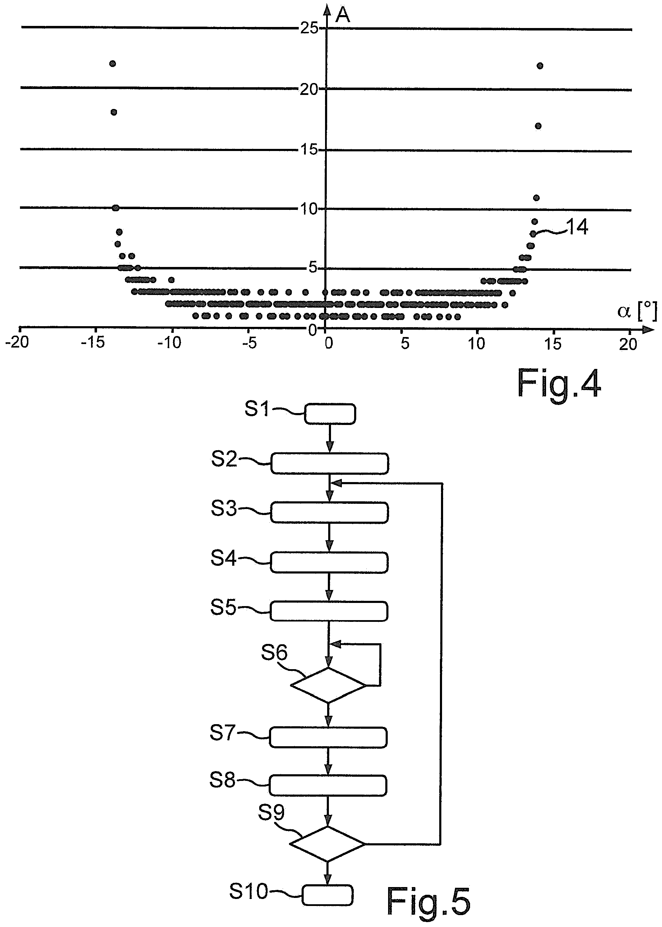

Fig. 4 zeigt eine Häufigkeitsverteilung der Sendezeitpunkte 14 gemäß Fig. 3. Dabei ist auf der Abszisse der Auslenkwinkel α und auf der Ordinate die Anzahl A der Sendezeitpunkte 14 aufgetragen. Hierbei ist zu erkennen, dass an den Randbereichen bzw. an den Umkehrpunkten des schwingenden Spiegelelements, welche im Bereich von -14°und +14° liegen, unnötigerweise mehrfach Lichtpulse aus gesendet werden. Vorliegend werden im Bereich von -14° und im Bereich von +14° bis zu 23 Lichtpulse ausgesendet. Dies führt beispielsweise dazu, dass Winkelpositionen in dem Winkelbereich 12, die diesen Auslenkwinkeln α zugeordnet sind, mit einer höheren Intensität beleuchtet werden. Dies kann insbesondere im Hinblick auf die Augensicherheit kritisch sein.

Fig. 5 zeigt ein schematisches Ablaufdiagramm eines Verfahrens zum Betreiben eines optoelektronischen Sensors 5 gemäß einer Ausführungsform der vorliegenden Erfindung. Das Verfahren wird in einem Schritt S1 gestartet. Somit wird auch ein Messzyklus, der mit dem optoelektronischen Sensor 5 durchgeführt wird, gestartet. In einem Schritt S2 werden die diskreten Winkelpositionen innerhalb des Winkelbereichs 12 bestimmt, die abgetastet werden sollen bzw. in welche die Lichtpulse ausgesendet werden sollen. Jedem der diskreten Winkelpositionen wird dann ein Sendeauslenkwinkel zugeordnet. Die Sendeauslenkwinkel beschreiben diejenigen Auslenkwinkel α des Spiegelelements, bei denen ein Lichtpuls ausgesendet werden soll. Es wird also für jede der diskreten Winkelpositionen ein korrespondierender Sendeauslenkwinkel bestimmt. Ferner kann ein Array bestimmt werden, in welchem zu jedem der bestimmen Sendeauslenkwinkel ein erster Wert eingetragen wird. Der erste Wert kann beispielsweise den Wert Null oder auch der Wert "False" sein.

In einem Schritt S3 wird der aktuelle Auslenkwinkel α des Spiegelelements bestimmt. Hier kann von der Ablenkeinheit 13 ein entsprechendes Signal empfangen werden. Der aktuelle Auslenkwinkel α kann auch auf Grundlage eines Ansteuersignals bestimmt werden, mit dem der Aktor der Ablenkeinheit 13 angesteuert wird. In einem Schritt S4 wird derjenige Sendeauslenkwinkel bestimmt, welcher dem aktuellen Auslenkwinkel α am nächsten ist. Dabei wird der nächstliegende Auslenkwinkel auf Grundlage des Arrays bestimmt. In einem Schritt S5 wird eine Wartezeit td bestimmt, nach deren Verstreichen das Spiegelelement den nächstliegenden Sendeauslenkwinkel erreichen wird. In einem Schritt S6 wird eine Schleife solange durchlaufen, bis die Wartezeit td verstrichen ist.

Falls die Wartezeit td verstrichen ist, wird die Lichtquelle 12 zum Aussenden des Lichtpulses angesteuert. Zudem wird der von dem Objekt 3 reflektierte Lichtpuls empfangen und auf Grundlage der Laufzeit der Abstand zwischen dem optoelektronischen Sensor 5 und dem Objekt 3 bestimmt. In einem Schritt S8 wird dem Sendeauslenkwinkel, bei dem der Lichtpuls ausgesendet wurde, in dem Array ein zweiter Wert zugeordnet. Der zweite Wert kann beispielsweise der Wert Eins oder "True" sein. In einem Schritt S9 wird dann überprüft, ob für alle bestimmten Auslenkwinkel α ein Lichtpuls ausgesendet wurde. Ist dies nicht der Fall, wird das Verfahren wieder in dem Schritt S3 fortgeführt. Ist dies der Fall, wird das Verfahren in einem Schritt S10 beendet.

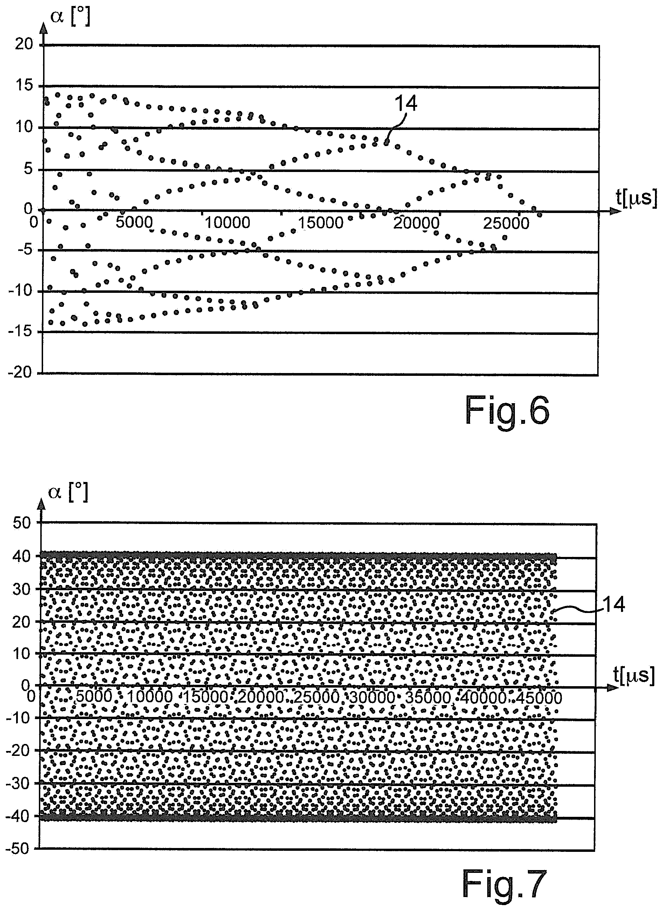

Fig. 6 zeigt die zeitliche Abfolge der Sendezeitpunkte 14, an welchen mit der Sendeeinrichtung 6 des optoelektronischen Sensors 5 die Lichtpulse ausgesendet werden. Dabei wird der optoelektronische Sensors 5 gemäß einem erfindungsgemäßen Verfahren betrieben. Hierbei ist zu erkennen, dass sich die Zeitintervalle zwischen den Sendezeitpunkten 14 unterscheiden. Die Lichtquelle 12 wird also nicht periodisch angesteuert. Dabei ist es zudem vorgesehen, dass an jedem der Sendeauslenkwinkel nur ein Lichtpuls ausgesendet wird. Ferner ist zu erkennen, dass der Messzyklus innerhalb einer zeitlichen Dauer von etwa 12,5 ms durchgeführt werden kann. Dabei wird berücksichtigt, dass zwischen dem Aussenden von zwei aufeinanderfolgenden Lichtpulsen eine Pause von 29,4 ms eingehalten wird. Dies entspricht der Frequenz von 34 kHz gemäß dem Beispiel von Fig. 3. Hier wird deutlich, dass im Vergleich zu üblichen Betrieb des optoelektronischen Sensors 5, welcher in Fig. 3 dargestellt ist, die Zeit für einen Messzyklus beinahe halbiert werden kann.

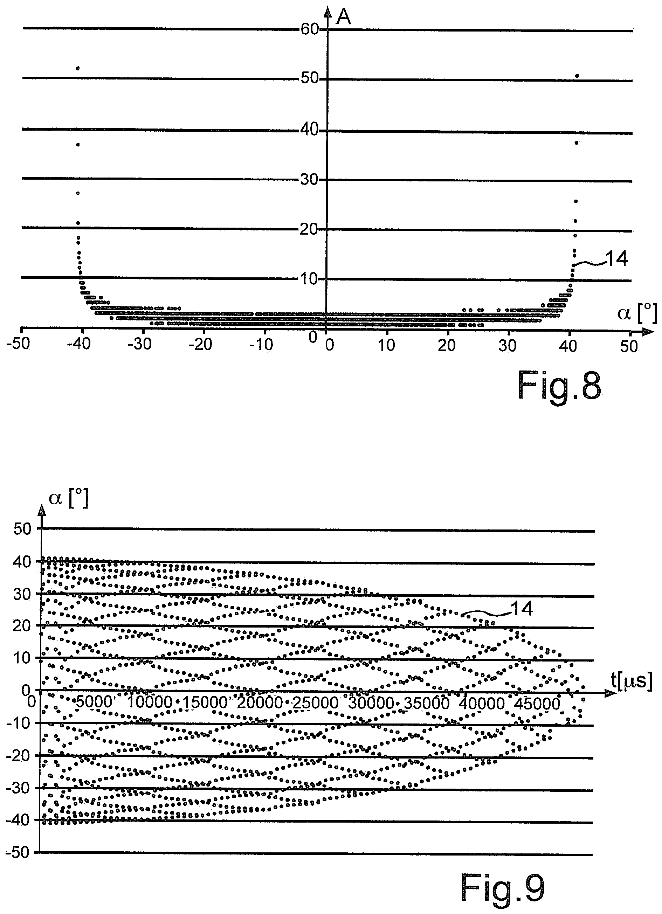

Fig. 7 zeigt eine weitere zeitliche Abfolge von Sendezeitpunkten 14, bei welcher die Lichtpulse gemäß einem Verfahren aus dem Stand der Technik periodisch ausgesendet werden. Bei diesem Beispiel werden die Lichtpulse mit einer Frequenz 100 kHz ausgesendet. Hierbei schwingt das Spiegelelement mit einer Frequenz von 3,485 kHz. In diesem Fall wird das Spiegelelement zwischen einem Auslenkwinkel α von -41°und einem Auslenkwinkel α von +41°ausgelenkt. Hierbei dauert es etwa 46,5 m s bis alle Winkelpositionen mindestens einmal gemessen wurden. Fig. 8 zeigt die dazugehörige Häufigkeitsverteilung. Hier ist zu erkennen, dass an den Randbereichen bzw. an den Umkehrpunkten bei -41°und +41°die Winkelpositione n unnötigerweise mehrmals vermessen werden. In diesem Fall werden an diesen Auslenkwinkeln bzw. an den Umkehrpunkten bis zu 52 Lichtpulse ausgesendet.

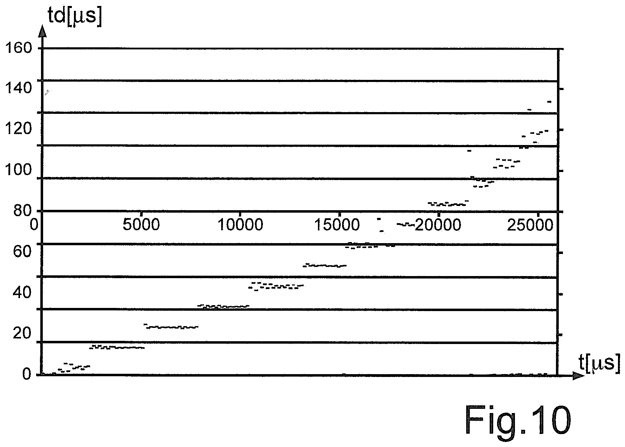

Im Vergleich hierzu zeigt Fig. 9 die zeitliche Abfolge der Sendezeitpunkte 14, wobei der optoelektronische Sensor 5 gemäß einem erfindungsgemäßen Verfahren betrieben wird. Auch hier wird berücksichtigt, dass zwischen dem Aussenden von zwei aufeinanderfolgenden Lichtpulsen eine zeitliche Dauer von etwa 10 µs eingehalten wird. Dies entspricht der Frequenz von 100 kHz gemäß dem Beispiel von Fig. 7. Hier ist zu erkennen, dass der Messzyklus innerhalb einer zeitlichen Dauer von 25,5 ms durchgeführt werden kann. Fig. 10 zeigt die jeweiligen Wartezeiten td, welche abgewartet werden müssen, bis das Spiegelelement den nächstliegenden Sendeauslenkwinkel erreicht hat. Hierbei ist zu erkennen, dass die Wartezeit td in während des Messzyklus zunimmt. Insgesamt kann der Messzyklus aber im Vergleich zu dem bekannten Verfahren deutlich schneller durchgeführt werden.

## Patentansprüche

1. Verfahren zum Betreiben eines optoelektronischen Sensors (5) eines Kraftfahrzeugs (1), bei welchem während eines Messzyklus zum Erfassen eines Objekts (3) mit einer Sendeeinrichtung (6) Lichtpulse ausgesendet werden und die von dem Objekt (3) reflektierten Lichtpulse mit einer Empfangseinrichtung (7) empfangen werden, wobei zum Aussenden der Lichtpulse eine Lichtquelle (12 - Fig. 2) der Sendeeinrichtung (6) zu bestimmten Sendezeitpunkten (14) angesteuert wird und die Lichtpulse mit einer Ablenkeinheit (13) der Sendeeinrichtung (6) innerhalb eines vorbestimmten Winkelbereichs (12 - Fig. 1) abgelenkt werden, wobei die Lichtquelle (12 - Fig. 2) derart angesteuert wird, dass sich Zeitintervalle zwischen den bestimmten Sendezeitpunkten (14) voneinander unterscheiden,
**dadurch gekennzeichnet,**
**dass** die Ablenkeinheit (13) ein schwingendes Spiegelelement aufweist, welches zum Ablenken der Lichtpulse periodisch ausgelenkt wird,
**dass** ein Auslenkwinkel (α) des Spiegelelements bestimmt wird und die Lichtquelle (12 - Fig. 2) in Abhängigkeit von dem bestimmten Auslenkwinkel (α) angesteuert wird,
**dass** innerhalb des Winkelbereichs (12 - Fig. 1) eine Mehrzahl von Winkelpositionen für das Aussenden der Lichtpulse bestimmt wird, für jede der Winkelpositionen ein Sendeauslenkwinkel bestimmt wird und der jeweilige Lichtpuls ausgesendet wird, falls der Auslenkwinkel (α) des Spiegelelements einem der Sendeauslenkwinkel entspricht,
**dass** anhand des aktuellen Auslenkwinkels (α) des Spiegelelements ein dem aktuellen Auslenkwinkel (α) nächstliegender Sendeauslenkwinkel bestimmt wird und der Lichtpuls ausgesendet wird, falls der aktuelle Auslenkwinkel (α) dem nächstliegenden Sendeauslenkwinkel entspricht
und **dass** anhand des aktuellen Auslenkwinkels (α) und des nächstliegenden Sendeauslenkwinkels eine Wartezeit (td) bestimmt wird, nach deren Ablauf das Spiegelelement den nächstliegende Sendeauslenkwinkel erreichen wird, und der Lichtpuls nach dem Ablauf der Wartezeit (td) ausgesendet wird.

2. Verfahren nach Anspruch 1,
**dadurch gekennzeichnet, dass**
die jeweiligen Lichtpulse während des Messzyklus bei jedem der Sendeauslenkwinkel nur einmal ausgesendet werden.

3. Verfahren nach Anspruch 1 oder 2,
**dadurch gekennzeichnet, dass**
jedem der Sendeauslenkwinkel zu Beginn des Messzyklus ein erster Wert zugeordnet wird und falls ein Lichtpuls bei einem der Sendeauslenkwinkel bereits ausgesendet wurde, diesem Sendeauslenkwinkel ein geänderter zweiter Wert zugeordnet wird.

4. Verfahren nach einem der Ansprüche 1 bis 3,
**dadurch gekennzeichnet, dass**
für jeden der Sendeauslenkwinkel ein Sendezeitpunkt bestimmt wird und die Lichtquelle (12 - Fig. 2) an den bestimmten Sendezeitpunkten jeweils angesteuert wird.

5. Verfahren nach einem der Ansprüche 1 bis 4,
**dadurch gekennzeichnet, dass**
die Ansteuerung der Lichtquelle (12 - Fig. 2) mit der Bewegung des Spiegelelements synchronisiert wird.

6. Verfahren nach einem der vorhergehenden Ansprüche,
**dadurch gekennzeichnet, dass**
nach dem Aussenden des Lichtpulses anhand der Laufzeit zwischen dem Aussenden des Lichtpulses und dem Empfangen des von dem Objekt (3) reflektierten Lichtpulses ein Abstand zwischen dem optoelektronischen Sensor (5) und dem Objekt (3) bestimmt wird und anschließend der nächste Lichtpuls ausgesendet wird.

7. Optoelektronischer Sensor (5) für ein Kraftfahrzeug (1), welcher zum Durchführen eines Verfahrens nach einem der vorhergehenden Ansprüche ausgelegt ist.

8. Optoelektronischer Sensor (5) nach Anspruch 7,
**dadurch gekennzeichnet, dass**
der optoelektronische Sensor (5) als Lidar-Sensor oder als Laserscanner ausgebildet ist.

9. Fahrerassistenzsystem (2) für ein Kraftfahrzeug (1) mit einem optoelektronischen Sensor (5) nach Anspruch 7 oder 8.

10. Kraftfahrzeug (1) mit einem Fahrerassistenzsystem (2) nach Anspruch 9.

## Claims

1. Method for operating an optoelectronic sensor (5) of a motor vehicle (1), in which during a measuring cycle for capturing an object (3), light pulses are emitted using an emitting device (6) and the light pulses reflected by the object (3) are received using a receiving device (7), wherein a light source (12 - Fig. 2) of the emitting device (6) is controlled at determined emission time points (14) to emit the light pulses and the light pulses are diverted using a diverting unit (13) of the emitting device (6) within a predetermined angle range (12 - Fig. 1), wherein the light source (12 - Fig. 2) is controlled in such a way that time intervals between the determined emission time points (14) differ from one another,
**characterized**
**in that** the diverting unit (13) has an oscillating mirror element, which is periodically deflected to deflect the light pulses,
**in that** a deflection angle (a) of the mirror element is determined and the light source (12 - Fig. 2) is controlled in dependence on the determined deflection angle (α),
**in that** a plurality of angle positions for the emission of the light pulses is determined within the angle range (12 - Fig. 1), an emission deflection angle is determined for each of the angle positions, and the respective light pulse is emitted if the deflection angle (a) of the mirror element corresponds to one of the emission deflection angles,
**in that**, on the basis of the current deflection angle (a) of the mirror element, an emission deflection angle closest to the current deflection angle (a) is determined and the light pulse is emitted if the current deflection angle (a) corresponds to the closest emission deflection angle, and
**in that**, on the basis of the current deflection angle (a) and the closest emission deflection angle, a waiting time (td) is determined, after the passage of which the mirror element will reach the closest emission deflection angle, and the light pulse will be emitted after the passage of the waiting time (td).

2. Method according to Claim 1,
**characterized in that**
the respective light pulses are emitted only once at each of the emission deflection angles during the measuring cycle.

3. Method according to Claim 1 or 2,
**characterized in that**
a first value is associated with each of the emission deflection angles at the beginning of the measuring cycle and, if a light pulse has already been emitted at one of the emission deflection angles, a second, modified value is associated with said emission deflection angle.

4. Method according to one of Claims 1 to 3,
**characterized in that**
an emission time point is determined for each of the emission deflection angles and the light source (12 - Fig. 2) is controlled at each of the determined emission time points.

5. Method according to one of Claims 1 to 4,
**characterized in that**
controlling the light source (12 - Fig. 2) is synchronized with the movement of the mirror element.

6. Method according to one of the preceding claims,
**characterized in that**
a distance between the optoelectronic sensor (5) and the object (3) is determined after the emission of the light pulse on the basis of the time of flight between the emission of the light pulse and the reception of the light pulse reflected by the object (3), and the next light pulse is subsequently emitted.

7. Optoelectronic sensor (5) for a motor vehicle (1), which is designed for carrying out a method according to one of the preceding claims.

8. Optoelectronic sensor (5) according to Claim 7,
**characterized in that**
the optoelectronic sensor (5) is designed as a lidar sensor or as a laser scanner.

9. Driver assistance system (2) for a motor vehicle (1) having an optoelectronic sensor (5) according to Claim 7 or 8.

10. Motor vehicle (1) having a driver assistance system (2) according to Claim 9.

## Revendications

1. Procédé pour faire fonctionner un capteur optoélectronique (5) d'un véhicule automobile (1), lors duquel, pendant un cycle de mesure, des impulsions lumineuses sont émises avec un dispositif d'émission (6) en vue de détecter un objet (3) et les impulsions lumineuses réfléchies par l'objet (3) sont reçues avec un dispositif de réception (7), une source de lumière (12 - Fig. 2) du dispositif d'émission (6) étant excitée à des instants d'émission (14) déterminés en vue d'émettre les impulsions lumineuses et les impulsions lumineuses étant défléchies avec une unité de déflexion (13) du dispositif d'émission (6) au sein d'une plage angulaire (12 - Fig. 2) prédéterminée, la source de lumière (12 - Fig. 2) étant excitée de telle sorte que les intervalles de temps entre les instants d'émission (14) déterminés sont différents les uns des autres,
**caractérisé en ce que**
l'unité de déflexion (13) possède un élément miroir oscillant qui est dévié périodiquement en vue de défléchir les impulsions lumineuses,
**en ce qu'**un angle de déviation (a) de l'élément miroir est déterminé et la source de lumière (12 - Fig. 2) est excitée en fonction de l'angle de déviation (a) déterminé, **en ce qu'**une pluralité de positions angulaires pour l'émission des impulsions lumineuses sont déterminées au sein de la plage angulaire (12 - Fig. 2), un angle de déviation d'émission est déterminé pour chacune des positions angulaires et l'impulsion lumineuse respective est émise dans le cas où l'angle de déviation (a) de l'élément miroir correspond à l'un des angles de déviation d'émission,
**en ce qu'**un angle de déviation d'émission le plus proche de l'angle de déviation (a) actuel est déterminé à l'aide de l'angle de déviation (a) actuel de l'élément miroir et l'impulsion lumineuse est émise dans le cas où l'angle de déviation (a) actuel correspond à l'angle de déviation d'émission le plus proche
et **en ce qu'**un temps d'attente (td) est déterminé à l'aide de l'angle de déviation (α) actuel et de l'angle de déviation d'émission le plus proche, après l'écoulement duquel l'élément miroir atteindra l'angle de déviation d'émission le plus proche, et l'impulsion lumineuse est émise après l'écoulement du temps d'attente (td).

2. Procédé selon la revendication 1, **caractérisé en ce que** les impulsions lumineuses respectives ne sont émises qu'une seule fois pendant le cycle de mesure à chacun des angles de déviation d'émission.

3. Procédé selon la revendication 1 ou 2, **caractérisé en ce qu'**une première valeur est attribuée à chacun des angles de déviation d'émission au début du cycle de mesure et, dans le cas où une impulsion lumineuse a déjà été émise à l'un des angles de déviation d'émission, une deuxième valeur modifiée est alors attribuée à cet angle de déviation d'émission.

4. Procédé selon l'une des revendications 1 à 3, **caractérisé en ce qu'**un instant d'émission est déterminé pour chacun des angles de déviation d'émission et la source de lumière (12 - Fig. 2) est respectivement excitée aux instants d'émission déterminés.

5. Procédé selon l'une des revendications 1 à 4, **caractérisé en ce que** l'excitation de la source de lumière (12 - Fig. 2) est synchronisée avec le mouvement de l'élément miroir.

6. Procédé selon l'une des revendications précédentes, **caractérisé en ce qu'**après l'émission de l'impulsion lumineuse, un écart entre le capteur optoélectronique (5) et l'objet (3) est déterminé à l'aide du temps de propagation entre l'émission de l'impulsion lumineuse et la réception de l'impulsion lumineuse réfléchie par l'objet (3) et l'impulsion lumineuse suivante est ensuite émise.

7. Capteur optoélectronique (5) pour un véhicule automobile (1), lequel est conçu pour mettre en œuvre un procédé selon l'une des revendications précédentes.

8. Capteur optoélectronique (5) selon la revendication 7, **caractérisé en ce que** le capteur optoélectronique (5) est réalisé sous la forme d'un capteur Lidar ou d'un système de balayage laser.

9. Système d'aide à la conduite (2) pour un véhicule automobile (1) comprenant un capteur optoélectronique (5) selon la revendication 7 ou 8.

10. Véhicule automobile (1) équipé d'un système d'aide à la conduite (2) selon la revendication 9.
